# EUROPEAN PATENT SPECIFICATION

(11) **EP 4 264 451 B1**
(45) Date of publication and mention of the grant of the patent: **07.08.2024**
(21) Application number: 21841000.9
(22) Date of filing: 15.12.2021
(51) Int. Cl.: G06F 16/38

(54) **METHOD AND AUTOMATIC SYSTEM FOR THE PRODUCTION OF ELECTRONIC DOCUMENTS, IN PARTICULAR DIGITAL REPORTS**
VERFAHREN UND AUTOMATISCHES SYSTEM ZUR HERSTELLUNG VON ELEKTRONISCHEN DOKUMENTEN, INSBESONDERE DIGITALEN BERICHTEN
PROCÉDÉ ET SYSTÈME AUTOMATIQUE DE PRODUCTION DE DOCUMENTS ÉLECTRONIQUES, EN PARTICULIER DE RAPPORTS NUMÉRIQUES

(30) Priority: 15.12.2020 IT 202000030845
(43) Date of publication of application: 25.10.2023
(73) Proprietor: Elettronica Marittima S.r.l., 44026 Mesola (IT)
(72) Inventor: GHEZZO, Enrico, 44121 Ferrara (IT); CICALO', Sergio, 44026 Mesola (Fe) (IT)
(74) Representative: Ruzzu, Giammario
(86) International application number: PCT/IB2021/061768
(87) International publication number: WO 2022/130239

(56) References cited:
- US-A1- 2004 118 920
- US-A1- 2013 197 945
- US-A1- 2015 312 440
- US-B1- 9 087 315

## Description

### TECHNICAL FIELD

The present invention relates, in general, to a system for the acquisition of information contained in identification documents such as electronic identity cards and passports, and to automatic entering the acquired data into electronic documents.

In this general context, a first prior document US 2004/118920 A1 is known, which describes a system and a method for detecting an image of an object and an optical code associated with the object and generating respective object image data and optical code image data. A database stores a plurality of digital codes and an object image data input associated with each respective digital code of the plurality of digital codes. A processing unit generates at least one digital code; accesses at least one input of object image data associated with at least one respective stored digital code which substantially corresponds to the respective at least one generated digital code; and compares the object image data with the at least one accessed object image data input and determines whether the comparison results are within a predetermined image recognition certainty threshold.

In another prior document US 9087315 B1, an apparatus for the safe tracking of containers during transportation is described.

The device pairs a container monitoring system with a portable terminal application to ensure a secure and verifiable chain of custody, real-time activity tracking and document management. According to one aspect of the present invention, the remote monitoring station verifies and recognizes identifications and licenses, and controls the transfer of container custody from agent to agent for each container unit. The present invention also provides a system for managing documentation where information travels from multiple sensors and multiple shipments and arrives with the actual shipments allowing the user to collect, view, scan, transmit and print all pertinent information regarding each specific shipment.

The aforementioned previous documents provide generic teachings, although insufficient, for the invention under examination which, in greater detail, relates to a system an automatic support system for drafting, i.e., filling in, documents. The acquired data, in any case, may also be stored in further electronic documents or files connected thereto, that is stored for later use and digitally transmitted to a remote server.

### TECHNICAL PROBLEM

The invention meetsto the dual need of the police, Coast Guard or Finance Police or other military personnel in the same situation, to speed up inspection operations as much as possible. Although the invention can be advantageously used in any field (terrestrial, nautical or air) in which the simplification of the reporting procedures and the optimization of the execution times of the operation are of particular importance, it is of particular importance in the application in the nautical field, as an instrument to be used during inspections to private or commercial vessels. In these cases, in fact, reducing the time required to stop the boat, especially in rough sea and/or when the object of the inspection is a merchant vessel of high tonnage, is an absolute priority. In fact, it must be considered that, especially for commercial boats, even one hour downtime can cost a lot in economic terms, in addition to the fact that keeping two boats close together can be dangerous, especially for the smaller one, with the risk of major damage.

For these reasons, the invention applied in the nautical field will be described by way of a not restrictive example.

Therefore, on the whole, the invention allows a rapid acquisition of the data necessary for filling in the electronic document, as well as its printing, digitalization and recording of said signed document, i.e. report, with storage in a local relational database and subsequent transmission to a remote database.

In order to be implemented, the system proposed by the invention includes the use of a series of latest generation technologies for the automatic acquisition of the identification data necessary for filling in the document; since the invention is related with and supporting the police, control and inspection forces, said identification data can be related, by way of a not exhaustive example, for example to a person, vessel, position of the military unit, name of the reporting officer, date and time, which allows to simplify and speed up the drafting of the report.

As already said, the invention is also designed to allow a possible storage and association of the data of the reports considered of interest, with the possibility of populating and querying a national database of the reports.

### ADVANTAGES

Among many others, the following advantages are to be pointed out:
- Automatic acquisition of all personal identification data by means of electronic ID card or passport;
- Front/back scanning of the paper identity document;
- Selection of the type of report from a set of pre-formatted templates, if present;
- Automatic heading and numbering of the report;
- Automatic populating of the date and time of the report beginning, carried out by reading the data of the computer in use or, preferably, of a geolocation system (GPS or others), for example of the inspected vessel;
- Automatic populating of a field relating to the position of the vessel at the time of inspection, by taking longitude and latitude data from the same geolocation system;
- Automatic identification of the vessel or in general, the vehicle;
- Automatic populating, by reporting officer, who draws data from a previously stored local database;
- Automatic populating of position data (via GPS of the electronic device on which the program is run);
- Possible automatic populating of the identification data of the inspected vehicle (for example, vessel), if equipped with an AIS (Automatic Identification System) transponder, it is possible to take them from the AIS list after interfacing with the Navigation System (SdN);
- Printing of the report transmitting data via Wi-Fi with a portable Wi-Fi printer;
- Scanning of the signed report via camera as an automatic attachment;
- Querying with filters and viewing of reports, people and officers from local databases.

### SUMMARY OF THE INVENTION

The invention is defined by the features of the independent claims. Further embodiments are the subject-matter of the dependent claims.

The foregoing purposes and advantages are achieved by means of a system for automatically filling in an electronic document with identification data, in particular a digital report, which comprises a computer or electronic device with data viewing and reading systems, in particular a sensor designed to capture high-resolution images and an NFC short-range wireless connectivity apparatus; said computer or electronic device being designed to run a computer program with which said data viewing and reading systems interact with an electronic identification document,
in particular identity card or passport, in order to acquire the data contained therein.

### BRIEF DESCRIPTION OF THE DRAWINGS

The characteristics of the invention under discussion will be evident from the following description of the preferred embodiments in accordance with what is proposed in the claims and with the help of the enclosed figure, in which:

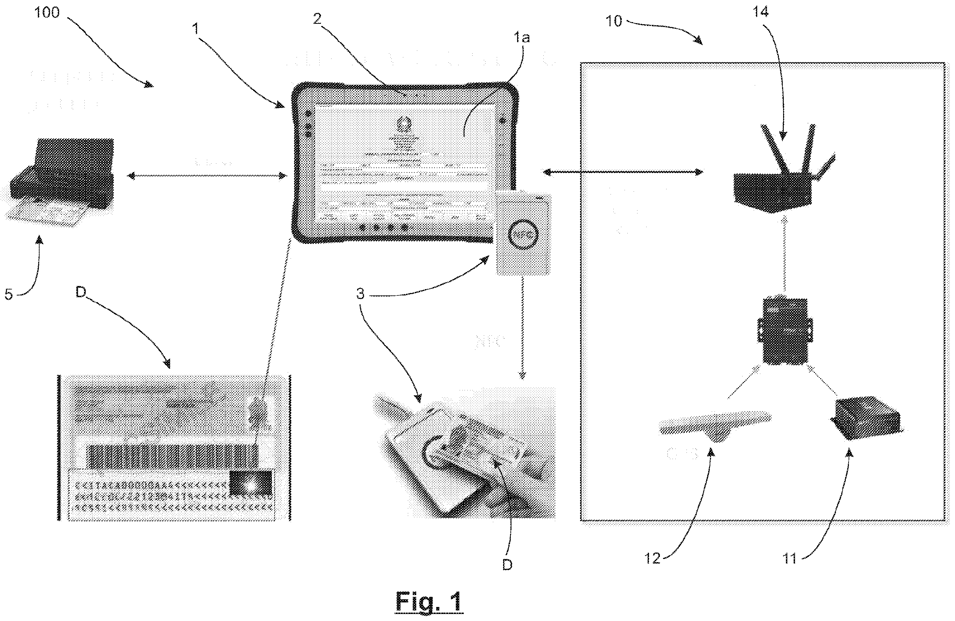

- Figure 1 illustrates a possible example of the invention, in particular the architecture of the system with its essential and optional components.

### DESCRIPTION OF PREFERRED EMBODIMENTS OF THE INVENTION

According to Figure 1, the system for automatically filling in a digital report according to the invention is suitable for operating during an inspection carried out on a vehicle, such as a private or commercial vessel. The system is intended to fill in, at least partially in automatic way, a plurality of data fields in a basic data structure, residing in the digital memory of a general purpose computer 1 or other dedicated electronic device, and corresponding to a standardized, pre-formatted and unfilled version of said digital report, intended to be completed with data relating to a person responsible for the above-mentioned vessel or other vehicle and/or the vessel.

In particular, the system comprises, preferably but not exclusively, the above-mentioned processor 1, such as a tablet with high specifications; said tablet integrates a sensor 2 aimed at acquiring high-resolution images, in this case a video camera, and an NFC reader (3) that allows the automatic scanning of the data of an electronic identification document D, such as the electronic identity card (CIE) or passport of a person responsible for the vehicle.

In greater detail:
- the video camera 2 acquires the image of the document framed by the operator in real time, and identifies and detects the MRZ (Machine Readable Zone) code of the document by means of a software for image processing and character recognition, even if the document in the image is blurred, rotated, tilted or of small size, importing all the data available in that code;
- subsequently, bringing the CIE D closer to the NFC reader 3, the system detects and imports further identification data of the person, and enters them in appropriate fields in the report.

In accordance with a preferred embodiment of the invention, the system can also import the GPS data of the tablet 1 for automatic filling in the temporal reference (exact date and time) and position field.

In accordance with a further aspect of the invention, when interfaced with the navy vessel Navigation System, the system imports AIS data:
- of the contested/verified vessel;
- the GPS and time reference data of the vessel if considered more reliable.

Moreover, after the report has been automatically filled in and printed on paper, the system allows scanning the signed report by means of the above mentioned video camera 2, or other video camera or camera, and attaching photos as further evidence of a detected infringement.

Generalizing the example shown in the figure, it is possible to say that the invention relates to a system for automatic filling in an electronic document, in particular a digital report, with data, the system comprising a computer or electronic device 1 with data viewing and reading systems, in particular a sensor 2 designed to capture high-resolution images and a NFC short-range wireless connectivity apparatus 3, and where the computer or electronic device 1 is designed to run a computer program with which said data viewing 2 and reading systems 3 interact with an electronic identification document D, in particular identity card or passport, in order to acquire the data contained therein.

According to an aspect of the invention, the computer or electronic device further includes a GPS module and/or a WiFi module so as to be associated with an AIS automatic identification system 10 and/or GPS data 12.

The processor or electronic device 1 is advantageously connected to the automatic identification 11 system 10 and/or GPS data 12 by means of a wireless communication line (typically a Wi-Fi connection), by means of an on-board router 14 present onboard the vessel.

Again, the computer or electronic device 1 is associated with at least one screen 2 for graphically reproducing the electronic document to be automatically filled in.

The compilation system of the invention further comprises a management program, operating in the aforementioned computer or electronic device 1, provided with suitable software procedures intended to perform the above described operations.

In particular, and in a not restrictive way, the following procedures are provided: a software procedure for personal identification, aimed at detecting the identification data of the person responsible for the aforesaid electronic identification document; a software procedure for identification of the means of transport aimed at detecting the identification data of the aforesaid vessel, a populating software procedure, aimed at acquiring data generated by the aforesaid procedures of person identification and identification of the means of transport and inserting them in appropriate positions in the data structure relating to the digital report being filled in; a software procedure for displaying the digital report being filled in, and the data fields that are progressively populated with the acquired information.

The structure and the formulation of the above mentioned procedures will not be described here in further detail since they are drafted using standard programming languages, and thus they are to be considered within the reach of the technician of average experience.

Peripherals such as printers 5 can be associated by respective communication ports or by WiFi communication protocol or other, in order to allow the immediate printing of the document on paper, the document being automatically filled in according to the teaching indicated herein, subsequent signing and scanning, likewise by the camera combined with the electronic device and dedicated software procedure for the automatic detection of the document.

In addition, the invention relates also to the method for automatic filling in an electronic document (report), the method comprising at least the steps of:
a. acquiring a first set of said data by reading, through optical recognition, the characters printed in an electronic identification document, in particular an identity card or passport,
b. storage of said first set of data,
c. acquiring a second set of said data contained in said electronic identification document and through NFC communication interface 3,
d. storage of said second set of data,
e. filling in respective text fields of an electronic document using said first and second sets of data;
f. acquiring a third set of data relating to the identification of the above mentioned vessel or another vehicle;
g. storage of said third set of data;
h. populating a basic data structure, residing in the digital memory of the computer or electronic device 1 and corresponding to a standardized, pre-formatted and unfilled version of said digital report, with the above mentioned first, second and third data sets.

According to an advantageous aspect of the invention, the step of acquiring the second data set uses the first data set as an access key to the data contained in the microprocessor of the electronic identity card or electronic passport and comprises acquiring the personal data and digital image stored therein.

According to another aspect of the invention, the first acquired set of data corresponds to the MRZ code of the electronic identification document.

Preferably, the data of the first and/or second sets of data are stored in an associated database.

It is also an object of the invention to provide a computer program configured to interact with one or more of the aforementioned systems for viewing and/or capturing and/or reading the data of the electronic identification document D, identity card or passport.

In particular, said computer program comprises portions of code for performing the method of automatically filling in electronic documents as described above and when said computer program is executed on said computer or electronic device 1.

As already said, the program uses a graphical interface configured to display, on the screen, the structure of the corresponding document to be filled in, while at the same time showing the fields or areas with the previously acquired data. The operator is also allowed to fill in/incorporate further fields typing them manually.

The system of reporting and automatic acquisition of the data of the person proposed by the invention allows to automate, digitize, simplify and speed up the processes of identification of the person and reporting by the administration. Furthermore, said system and method allow also to:
- digitize nationwide all reports for quick filling in, storing and consultation,
- verify instantly if a person has been previously contested and/or verified,
- uniform reporting processes,
- facilitating operatives in rapid reporting and identification.

It is understood that what is described above has only an illustrative and not limiting value, therefore any detail variations that may be necessary for technical and/or functional reasons are considered from now on within the same protection scope defined by the claims below.

## Claims

1. A system for automatically filling in identification data in an electronic document, in particular a digital report, to be filled in during an inspection carried out on a means of transport, such as a vessel or another vehicle, said system (100) comprising: a computer or electronic device (1) with associated thereto data viewing and reading systems, in particular a sensor (2) designed to capture high-resolution images and an NFC short-range wireless connectivity apparatus (3); said computer or electronic device (1) being designed to run a computer program with which said data viewing and reading systems interact with an electronic identification document (D), in particular an identity card or passport, in order to capture the data contained therein, and also interact with a corresponding identification system (10) of said vessel or another vehicle in order to capture the relevant data thereof as a first set of data; a basic data structure, that resides in the digital memory of said computer (1) and corresponds to a standardised, pre-formatted and unfilled version of said digital report, intended to be filled in with data relating to a person responsible for said vessel or another vehicle and/or to said vessel or another vehicle; a software procedure for personal identification, operating in said computer or electronic device (1), designed to detect the identification data of the responsible person from said electronic identification document (D); a software procedure for identification of the means of transport, operating in said computer or electronic device (1), designed to detect the identification data of said vessel or another vehicle; a populating software procedure, operating in said computer or electronic device (1), intended to collect data generated by said procedures for identification of the person and identification of the means of transport and insert them in appropriate positions in said digital report; said system (100) being **characterised in that** said computer program moreover comprises a procedure for using said first set of data as an access key to a second set of data, this latter comprising the data contained in the microprocessor of the electronic identity card or electronic passport (D) and for acquiring the personal data and the digital image stored therein.

2. System according to claim 1, wherein said means of transport includes an automatic identification system (11) of the AIS (Automatic Identification System) type, and wherein said identification procedure of the means of transport is an AIS data interfacing and acquisition procedure.

3. System according to claim 1, wherein the computer or electronic device further includes a GPS module and/or a WiFi module so as to be associated with an AIS automatic identification system (11) and/or GPS data (12), via a router (14) residing in the vessel.

4. System according to claim 1, wherein the computer or electronic device (1) comprises at least one display (1a) for graphically reproducing the electronic document to be filled in automatically.

5. Method for automatically filling in an electronic document, in particular a digital report, to be filled in during an inspection carried out on a means of transport, such as a vessel or another vehicle, the method comprising the steps of:
a. acquiring a first set of said data by reading, through optical recognition, the characters printed in an electronic identification document (D), in particular an identity card or a passport,
b. storing said first set of data,
c. acquiring a second set of said data contained in said electronic identification document and via NFC communication interface (3),
d. storing said second set of data,
e. filling respective text fields of an electronic document using said first and second sets of data;
f. acquiring a third set of data relating to the identification of said vessel or another vehicle;
g. storing said third set of data;
h. populating a basic data structure, that resides in the digital memory of said computer or electronic device (1) and corresponds to a standardised, pre-formatted and unfilled version of said digital report, with said first, second and third sets of data;
wherein the cited step of acquiring the second set of data uses the first set of data as an access key to the data contained in the microprocessor of the electronic identity card or electronic passport (D) and comprises acquiring the personal data and the digital image stored therein.

6. Method according to claim 5, wherein said first set of data corresponds to the MRZ,Machine Readable Zone, code of the electronic identification document (D).

7. Method according to claim 5, wherein said first and/or second sets of data are stored in an associated database.

8. Method according to claim 5, wherein said third set of data is acquired by a software procedure for vehicle identification operating in said computer or electronic device (1), from data present in a digital identification system (AIS) (10) of said vessel or another vehicle, by means of a connection on a standard digital communication line.

9. A computer program configured to interact with one or more systems for viewing and/or capturing and/or reading data contained in an electronic identification document, in particular an identity card or passport, wherein said computer program comprises portions of code for performing the method of automatically filling in electronic documents, according to at least one of the preceding claims, when said computer program is executed on said computer or electronic device (1), and further comprises a graphical interface configured to be displayed on a display of said computer or electronic device (1); said graphical user interface being also configured to reproduce on a display (1a) the layout of the corresponding document to be filled in, while showing the fields or areas with the data previously acquired; **characterized in that** it moreover comprises a program procedure for acquiring a first set of data contained in said electronic identity card or electronic passport (D), for using said first set of data as an access key to the data contained in the microprocessor of the electronic identity card or electronic passport (D), and for acquiring the personal data and the digital image stored therein.

## Patentansprüche

1. System zum automatischen Ausfüllen von Identifizierungsdaten in einem elektronischen Dokument, insbesondere einem digitalen Bericht, das bei einer auf einem Transportmittel, wie einem Schiff oder einem anderen Fahrzeug, durchgeführten Inspektion auszufüllen ist, wobei das System (100) Folgendes umfasst: einen Computer oder ein elektronisches Gerät (1) mit ihm zugeordneten Datensicht- und Lesesystemen, insbesondere einem Sensor (2), der dazu bestimmt ist, hochauflösende Bilder zu erfassen, und einer drahtlosen NFC-Kurzstreckenverbindungsvorrichtung (3); wobei der Computer oder die elektronische Vorrichtung (1) dafür ausgelegt ist, ein Computerprogramm auszuführen, mit dem die Datensicht- und Lesesysteme mit einem elektronischen Identifikationsdokument (D), insbesondere einem Personalausweis oder Reisepass, interagieren, um die darin enthaltenen Daten zu erfassen, und auch mit einem entsprechenden Identifikationssystem (10) des Schiffes oder eines anderen Fahrzeugs interagieren, um die relevanten Daten davon als einen ersten Satz von Daten zu erfassen; eine Basisdatenstruktur, die sich im digitalen Speicher des Computers (1) befindet und einer standardisierten, vorformatierten und unausgefüllten Version des digitalen Berichts entspricht, die dazu bestimmt ist, mit Daten ausgefüllt zu werden, die sich auf eine für das Schiff oder ein anderes Fahrzeug verantwortliche Person und/oder auf das Schiff oder ein anderes Fahrzeug beziehen; ein Softwareverfahren zur Personenidentifikation, das in dem Computer oder der elektronischen Vorrichtung (1) arbeitet und dazu bestimmt ist, die Identifikationsdaten der verantwortlichen Person anhand des elektronischen Identifikationsdokuments (D) zu erkennen; ein Softwareverfahren zur Identifizierung des Transportmittels, das in dem Computer oder der elektronischen Vorrichtung (1) arbeitet und dazu bestimmt ist, die Identifizierungsdaten des Schiffes oder eines anderen Fahrzeugs zu erfassen; ein Softwareverfahren zum Auffüllen, das in dem Computer oder der elektronischen Vorrichtung (1) arbeitet und dazu bestimmt ist, die von den Prozeduren zur Identifizierung der Person und zur Identifizierung des Transportmittels erzeugten Daten zu sammeln und sie an geeigneten Stellen in den digitalen Bericht einzufügen; wobei das System (100) **dadurch gekennzeichnet ist, dass** das Computerprogramm außerdem eine Prozedur umfasst, um den ersten Datensatz als Zugangsschlüssel zu einem zweiten Datensatz zu verwenden, wobei letzterer die im Mikroprozessor des elektronischen Personalausweises oder elektronischen Reisepasses (D) enthaltenen Daten umfasst, und um die persönlichen Daten und das darin gespeicherte digitale Bild zu erfassen.

2. System nach Anspruch 1, bei dem das Transportmittel ein automatisches Identifikationssystem (11) vom Typ AIS (Automatic Identification System) enthält und bei dem die Prozedur zur Identifizierung des Transportmittels eine AIS-Datenschnittstellen- und Erfassungsprozedur ist.

3. System nach Anspruch 1, wobei der Computer oder das elektronische Gerät außerdem ein GPS-Modul und/oder ein WiFi-Modul enthält, um über einen Router (14), der sich im Schiff befindet, mit einem automatischen Identifikationssystem (11) und/oder GPS-Daten (12) verbunden zu werden.

4. System nach Anspruch 1, wobei der Computer oder die elektronische Vorrichtung (1) mindestens ein Display (1a) zur grafischen Darstellung des automatisch auszufüllenden elektronischen Dokuments umfasst.

5. Verfahren zum automatischen Ausfüllen von Identifizierungsdaten in einem elektronischen Dokument, insbesondere einem digitalen Bericht, das bei einer auf einem Transportmittel, wie einem Schiff oder einem anderen Fahrzeug, durchgeführten Inspektion auszufüllen ist, wobei das Verfahren die folgenden Schritte umfasst:
a. Erfassen eines ersten Satzes der Daten durch Lesen der in einem elektronischen Identifikationsdokument (D), insbesondere einem Personalausweis oder einem Reisepass, aufgedruckten Zeichen durch optische Erkennung,
b. Speichern des ersten Satzes von Daten,
c. Erfassen eines zweiten Satzes von Daten, der in dem elektronischen Identifikationsdokument enthalten ist, über die NFC-Kommunikationsschnittstelle (3),
d. Speichern des zweiten Satzes von Daten,
e. Ausfüllen der jeweiligen Textfelder eines elektronischen Dokuments unter Verwendung des ersten und des zweiten Satzes von Daten;
f. Erfassen eines dritten Satzes von Daten, der sich auf die Identifizierung des Schiffes oder eines anderen Fahrzeugs bezieht;
g. Speichern des dritten Satzes von Daten;
h. Auffüllen einer grundlegenden Datenstruktur, die sich in dem digitalen Speicher des Computers oder der elektronischen Vorrichtung (1) befindet und einer standardisierten, vorformatierten und unausgefüllten Version des digitalen Berichts entspricht, mit dem ersten, zweiten und dritten Satz von Daten;
wobei der genannte Schritt der Erfassung des zweiten Satzes von Daten den ersten Satz von Daten als Zugangsschlüssel zu den im Mikroprozessor des elektronischen Personalausweises oder elektronischen Reisepasses (D) enthaltenen Daten verwendet und die Erfassung der persönlichen Daten und des darin gespeicherten digitalen Bildes umfasst.

6. Verfahren nach Anspruch 5, wobei der erste Satz von Daten dem MRZ-Code (Machine Readable Zone) des elektronischen Ausweises (D) entspricht.

7. Verfahren nach Anspruch 5, wobei der erste und/oder der zweite Satz von Daten in einer zugehörigen Datenbank gespeichert werden.

8. Verfahren nach Anspruch 5, wobei der dritte Satz von Daten durch ein Softwareverfahren zur Fahrzeugidentifikation, das in dem Computer oder der elektronischen Vorrichtung (1) arbeitet, aus Daten, die in einem digitalen Identifikationssystem (AIS) (10) des Schiffes oder eines anderen Fahrzeugs vorhanden sind, mittels einer Verbindung über eine digitale Standardkommunikationsleitung erfasst wird.

9. Computerprogramm, das so konfiguriert ist, dass es mit einem oder mehreren Systemen zum Betrachten und/oder Erfassen und/oder Lesen von Daten, die in einem elektronischen Identifikationsdokument, insbesondere einem Personalausweis oder Reisepass, enthalten sind, interagiert, wobei das Computerprogramm Codeabschnitte zum Durchführen des Verfahrens zum automatischen Ausfüllen elektronischer Dokumente gemäß mindestens einem der vorhergehenden Ansprüche umfasst, wenn das Computerprogramm auf dem Computer oder der elektronischen Vorrichtung (1) ausgeführt wird, und ferner eine grafische Schnittstelle umfasst, die so konfiguriert ist, dass sie auf einem Display des Computers oder der elektronischen Vorrichtung (1) angezeigt wird; wobei die grafische Benutzerinterface auch so konfiguriert ist, dass sie auf einem Display (1a) das Layout des entsprechenden auszufüllenden Dokuments wiedergibt, wobei sie die Felder oder Bereiche mit den zuvor erfassten Daten anzeigt; **dadurch gekennzeichnet, dass** sie außerdem eine Programm-Prozedur umfasst, um einen ersten Satz von Daten zu erfassen, die in dem elektronischen Personalausweis oder elektronischen Reisepass (D) enthalten sind, um diesen ersten Satz von Daten als Zugangsschlüssel zu den Daten zu verwenden, die in dem Mikroprozessor des elektronischen Personalausweises oder elektronischen Reisepasses (D) enthalten sind, und um die persönlichen Daten und das darin gespeicherte digitale Bild zu erfassen.

## Revendications

1. Un système pour remplir automatiquement des données d'identification dans un document électronique, en particulier un rapport numérique, à remplir lors d'une inspection effectuée sur un moyen de transport, tel qu'un navire ou un autre véhicule, ledit système (100) comprenant: un ordinateur ou un dispositif électronique (1) auquel sont associés des systèmes de visualisation et de lecture de données, en particulier un capteur (2) conçu pour capturer des images à haute résolution et un appareil de connectivité sans fil à courte portée NFC (3); ledit ordinateur ou dispositif électronique (1) étant conçu pour exécuter un programme informatique avec lequel lesdits systèmes de visualisation et de lecture des données interagissent avec un document d'identification électronique (D), en particulier une carte d'identité ou un passeport, afin de capturer les données qu'il contient, et interagissent également avec un système d'identification correspondant (10) dudit navire ou d'un autre véhicule afin de capturer les données pertinentes de celui-ci en tant que premier ensemble de données; une structure de données de base, qui réside dans la mémoire numérique dudit ordinateur (1) et correspond à une version standardisée, préformatée et non remplie dudit rapport numérique, destinée à être remplie avec des données relatives à une personne responsable dudit bateau ou autre véhicule et/ou audit bateau ou autre véhicule; une procédure logicielle d'identification personnelle, fonctionnant dans ledit ordinateur ou dispositif électronique (1), conçue pour détecter les données d'identification de la personne responsable à partir dudit document d'identification électronique (D); une procédure logicielle d'identification du moyen de transport, fonctionnant dans ledit ordinateur ou dispositif électronique (1), conçue pour détecter les données d'identification dudit navire ou autre véhicule; une procédure logicielle d'alimentation, fonctionnant dans ledit ordinateur ou dispositif électronique (1), destinée à collecter les données générées par lesdites procédures d'identification de la personne et d'identification du moyen de transport et à les insérer dans les positions appropriées dans ledit rapport numérique; ledit système (100) étant **caractérisé en ce que** ledit programme d'ordinateur comprend en outre une procédure pour utiliser ledit premier ensemble de données comme clé d'accès à un deuxième ensemble de données, ce dernier comprenant les données contenues dans le microprocesseur de la carte d'identité électronique ou du passeport électronique (D) et pour acquérir les données personnelles et l'image numérique qui y sont mémorisées.

2. Système selon la revendication 1, dans lequel ledit moyen de transport comprend un système d'identification automatique (11) de type AIS (Automatic Identification System), et dans lequel ladite procédure d'identification du moyen de transport est une procédure d'interfaçage et d'acquisition de données AIS.

3. Système selon la revendication 1, dans lequel l'ordinateur ou le dispositif électronique comprend en outre un module GPS et/ou un module WiFi de manière à être associé à un système d'identification automatique AIS (11) et/ou à des données GPS (12), via un routeur (14) résidant dans le navire.

4. Système selon la revendication 1, dans lequel l'ordinateur ou le dispositif électronique (1) comprend au moins un écran (1a) pour reproduire graphiquement le document électronique à remplir automatiquement.

5. Procédé pour remplir automatiquement un document électronique, en particulier un rapport numérique, à remplir lors d'une inspection effectuée sur un moyen de transport, tel qu'un navire ou un autre véhicule, le procédé comprenant les étapes suivantes:
a. acquérir un premier ensemble de données en lisant, par reconnaissance optique, les caractères imprimés dans un document d'identification électronique (D), en particulier une carte d'identité ou un passeport,
b. mémoriser ce premier ensemble de données,
c. acquérir un deuxième ensemble de données contenues dans ce document d'identification électronique et via l'interface de communication NFC (3),
d. mémoriser ce deuxième ensemble de données,
e. remplir les champs de texte respectifs d'un document électronique à l'aide de ces premier et deuxième ensembles de données;
f. acquérir un troisième ensemble de données relatives à l'identification dudit navire ou d'un autre véhicule;
g. mémoriser ce troisième ensemble de données;
h. remplir une structure de données de base, qui réside dans la mémoire numérique dudit ordinateur ou dispositif électronique (1) et correspond à une version normalisée, pré-formatée et non remplie dudit rapport numérique, avec lesdits premier, deuxième et troisième ensembles de données; dans laquelle l'étape citée d'acquisition du deuxième ensemble de données utilise le premier ensemble de données comme clé d'accès aux données contenues dans le microprocesseur de la carte d'identité électronique ou du passeport électronique (D) et comprend l'acquisition des données personnelles et de l'image numérique qui y sont mémorisées.

6. Procédé selon la revendication 5, dans lequel ledit premier ensemble de données correspond au code MRZ (Machine Readable Zone) du document d'identification électronique (D).

7. Procédé selon la revendication 5, dans laquelle lesdits premier et/ou deuxième ensembles de données sont stockés dans une base de données associée.

8. Procédé selon la revendication 5, dans lequel ledit troisième ensemble de données est acquis par une procédure logicielle d'identification de véhicule fonctionnant dans ledit ordinateur ou dispositif électronique (1), à partir de données présentes dans un système d'identification numérique (AIS) (10) dudit navire ou d'un autre véhicule, au moyen d'une connexion sur une ligne de communication numérique standard.

9. Programme d'ordinateur configuré pour interagir avec un ou plusieurs systèmes de visualisation et/ou de capture et/ou de lecture de données contenues dans un document d'identification électronique, en particulier une carte d'identité ou un passeport, dans lequel ledit programme d'ordinateur comprend des portions de code pour l'exécution du procédé de remplissage automatique de documents électroniques, selon au moins l'une des revendications précédentes, lorsque ledit programme d'ordinateur est exécuté sur ledit ordinateur ou dispositif électronique (1), et comprend en outre une interface graphique configurée pour être affichée sur un écran dudit ordinateur ou dispositif électronique (1); ladite interface graphique est également configurée pour reproduire sur un écran (1a) la mise en page du document correspondant à remplir, tout en montrant les champs ou les zones avec les données précédemment acquises; **caractérisé en ce qu'**il comprend en outre une procédure de programme pour l'acquisition d'un premier ensemble de données contenues dans ladite carte d'identité électronique ou passeport électronique (D), pour l'utilisation dudit premier ensemble de données comme clé d'accès aux données contenues dans le microprocesseur de la carte d'identité électronique ou du passeport électronique (D), et pour l'acquisition des données personnelles et de l'image numérique qui y sont mémorisées.
